# EUROPÄISCHE PATENTANMELDUNG

(11) **EP 4 496 073 A1**
(43) Veröffentlichungstag der Anmeldung: **22.01.2025**
(21) Anmeldenummer: 23186224.4
(22) Anmeldetag: 18.07.2023
(51) Int. Cl.: H01M 10/613, H01M 10/643, H01M 10/653, H01M 50/213, H01M 50/227, H01M 50/264

(54) **KLEMMVERBUND MIT EINEM ZELLHALTER UND EINER MEHRZAHL VON ELEKTROCHEMISCHEN ENERGIESPEICHERELEMENTEN**

(71) Anmelder: VARTA Microbattery GmbH, 73479 Ellwangen Jagst (DE)
(72) Erfinder: Schnirch, Harald, 73463 Westhausen-Reichenbach (DE)
(74) Vertreter: Ostertag & Partner Patentanwälte mbB

(57) **Zusammenfassung**

Es wird ein Klemmverbund (100) mit einem Zellhalter (10) und einer Mehrzahl von elektrischen Energiespeicherelementen (20) in Form von zylindrischen Rundzellen vorgeschlagen. Die zylindrischen Rundzellen weisen jeweils eine Mantelfläche und zwei Stirnseiten auf. Der Zellhalter (10) des Klemmverbunds ist einteilig und ist aus Kunststoff gebildet. Weiterhin weist der Zellhalter (10) eine Mehrzahl von Aussparungen (11) in drei- oder mehreckiger Form mit einer entsprechenden Anzahl von Innenseiten auf. Die einzelnen Energiespeicherelemente (20) sind jeweils in einer Aussparung (11) des Zellhalters (10) eingeklemmt, wobei der Zellhalter (10) im Bereich der Mantelfläche der Energiespeicherelemente (20) angreift, so dass die Stirnseiten der einzelnen Energiespeicherelemente (20) außerhalb des Zellhalters (10) liegen. Vorzugsweise sind die Innenseiten der einzelnen Aussparungen zum Teil mit Klemmrippen (13) versehen.

## Beschreibung

Die vorliegende Erfindung betrifft einen Klemmverbund mit einem Zellhalter und einer Mehrzahl von elektrischen Energiespeicherelementen in Form von zylindrischen Rundzellen sowie eine Batterie, die einen solchen Klemmverbund umfasst.

### ANWENDUNGSGEBIET UND STAND DER TECHNIK

Bei Batterien handelt es sich um wieder aufladbare, elektrische Energiespeicher, die beispielsweise in automobilen Anwendungen, aber auch in vielen anderen Bereichen, zum Einsatz kommen. In einer Batterie werden mehrere elektrochemische Energiespeicherelemente zusammengeschaltet, um so die für verschiedene Anwendungen erforderlichen elektrischen Ströme und Spannungen bereitstellen zu können.

Unter einem Energiespeicherelement werden vorliegend sowohl eine einzelne, zur Speicherung von elektrischer Energie befähigte elektrochemische Zelle als auch eine Batterie mit mehreren elektrisch miteinander verschalteten, zur Speicherung von elektrischer Energie befähigten elektrochemischen Zellen verstanden.

Jedes elektrochemische Energiespeicherelement basiert auf einer oder mehreren elektrochemischen Zelle. Eine elektrochemische Zelle im Sinne der vorliegenden Anmeldung umfasst mindestens eine positive und mindestens eine negative Elektrode, welche durch einen Separator voneinander getrennt sind. In elektrochemischen Zellen findet eine elektrochemische, energieliefernde Reaktion statt, welche sich aus zwei elektrisch miteinander gekoppelten, aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zwecke des Ladungsausgleichs zu einem der Elektrodenreaktion entsprechenden lonenstrom innerhalb der elektrochemischen Zelle. Dieser lonenstrom, der von einem ionenleitenden Elektrolyten ermöglicht wird, durchquert den Separator.

In sekundären (wieder aufladbaren) elektrochemischen Zellen ist diese Entladereaktion reversibel, es besteht also die Möglichkeit, die bei der Entladung erfolgte Umwandlung von chemischer Energie in elektrische Energie umzukehren.

Für Anwendungen im täglichen Umfeld oder im Haushalt, beispielsweise für Telefone, Haushaltsgeräte, Werkzeuge, elektrische Fahrräder, elektrische Roller oder ähnliches, werden in der Regel sogenannte Akkumulatoren verwendet, also wiederaufladbare Energiespeicherelemente. Hierbei kommen entweder einzelnen Energiespeicherzellen oder Batteriepacks/Batteriemodule, die mehrere Energiespeicherzellen umfassen, zum Einsatz.

Größere Batterien oder Batteriesysteme sind meist aus Batteriemodulen zusammengesetzt, die in der Regel eine Vielzahl von miteinander verschaltete Energiespeicherzellen umfassen. Die Anzahl der in einem Batteriemodul enthaltenen Energiespeicherzellen hängt von den jeweils benötigten Strömen und Spannungen ab. Für Anwendungen im Bereich der Elektromobilität oder für große stationäre Energiespeicher werden in der Regel sehr große Ströme und hohe Spannungen und entsprechend viele Energiespeicherzellen benötigt.

Eine in Batterien oftmals verwendete elektrochemische Zelle ist die Lithium-Ionen-Zelle. Diese umfasst Elektroden, die Lithium-Ionen reversibel aufnehmen und wieder abgeben können, sowie einen Lithium-Ionen enthaltenden Elektrolyten.

Bei elektrochemischen Zellen und insbesondere auch bei Lithium-Ionen-Zellen sind verschiedene Bauformen bekannt. Neben prismatischen Formen sind Knopfzellen und zylindrische Rundzellen weit verbreitet. Sowohl Knopfzellen als auch Rundzellen haben eine im Wesentlichen kreisförmige Grundfläche. Dabei unterscheiden sich zylindrische Rundzellen von Knopfzellen darin, dass Knopfzellen eine Höhe aufweisen, die geringer als ihr Durchmesser ist. Zylindrische Rundzellen weisen hingegen eine Höhe auf, die größer als ihr Durchmesser ist. Batterien oder Batteriemodule sind oftmals mit einem kubischen äußeren Gehäuse ausgestattet. Innerhalb des Gehäuses sind die Energiespeicherelemente angeordnet, wobei zur Positionierung und Fixierung der Energiespeicherelemente innerhalb des Gehäuses oftmals eine Haltematrix, auch als Zellhalter bezeichnet, verwendet wird. Im Fall von zylindrischen Rundzellen wird in der Regel ein zweiteiliger Zellhalter aus Kunststoff verwendet, der die entlang ihrer Längsachsen parallel ausgerichteten Rundzellen im Bereich ihrer jeweiligen Stirnseiten fixiert und einrahmt.

Ein zweiteiliger Zellhalter geht beispielsweise aus der EP 3926704 A1 hervor. Hier wird ein Batteriemodul beschrieben, das zwei oder mehr Batterieblöcke umfasst. Jeder Batterieblock umfasst eine Mehrzahl von zylindrischen Rundzellen, die in entsprechenden Aufnahmen eines Zellhalters angeordnet sind. Die Rundzellen sind dabei in einem regelmäßigen Muster in mehreren Reihen angeordnet. Der Zellhalter untergliedert sich in ein unteres Zellhalterelement und in ein oberes Zellhalterelement, wobei die Stirnseiten der zylindrischen Rundzellen jeweils von dem oberen Zellhalterelement bzw. dem unteren Zellhalterelement eingefasst und fixiert werden.

Die DE 102021125265 A1 offenbart eine Haltestruktur für die Energiespeicherzellen eines Energiespeichers. Eine aus Kunststoff gebildete Struktur bildet einen Aufnahmeraum für die einzelnen Batteriezellen, wobei der Aufnahmeraum eine wabenartige Struktur ausbildet. Der Aufnahmeraum für die einzelnen Energiespeicherzellen ist becherartig ausgebildet.

Die DE 202018005411 U1 beschreibt ein Batteriemodul mit Rundzellen, wobei die Rundzellen durch eine Haltematrix aus Kunststoff mit passgenauen Aufnahmen in Form zylindrischer Hohlräume und einem oberen und unteren Halterahmen gehalten werden. Das beschriebene Batteriemodul besitzt kein Gehäuse im eigentlichen Sinne. Vielmehr werden die Gehäusefunktionen von der selbsttragenden Haltematrix aus Kunststoff übernommen.

Die CN 217903281 U beschreibt eine Haltestruktur für Energiespeicherzellen mit wabenartiger Struktur. An der Unterseite jeder Öffnung der Wabenstruktur, die zur Aufnahme einer Energiespeicherzelle vorgesehen ist, befinden sich sechs Vorsprünge, die ein Herausfallen der Energiespeicherzellen verhindern.

### AUFGABE UND LÖSUNG

Vor diesem Hintergrund stellt sich die Erfindung die Aufgabe, eine verbesserte Möglichkeit zum Halten und Fixieren von Energiespeicherelementen innerhalb einer Batterie bereitzustellen. Insbesondere soll hierdurch die Produktion von Batterien vereinfacht und Bauteile eingespart werden.

Diese Aufgabe wird durch einen Klemmverbund mit einem Zellhalter und einer Mehrzahl von elektrischen Energiespeicherelementen gemäß Anspruch 1 gelöst. Die Aufgabe wird weiterhin durch eine Batterie nach dem weiteren unabhängigen Anspruch gelöst. Bevorzugte Ausgestaltungen des Klemmverbunds und der Batterie ergeben sich aus den jeweiligen abhängigen Ansprüchen.

Der erfindungsgemäße Klemmverbund umfasst einen Zellhalter und eine Mehrzahl von elektrischen Energiespeicherzellen. Die elektrischen Energiespeicherelemente sind als zylindrische Rundzellen ausgebildet und weisen insbesondere ein zylindrisches Gehäuse mit einer Mantelfläche und zwei Stirnseiten auf. Der Klemmverbund zeichnet sich durch die folgenden Merkmale aus:
a. Der Zellhalter ist einteilig;
b. Der Zellhalter ist aus Kunststoff gebildet;
c. Der Zellhalter weist eine Mehrzahl von Aussparungen in drei- oder mehreckiger Form mit einer entsprechenden Anzahl von Innenseiten auf;
d. Die einzelnen Energiespeicherelemente sind jeweils in einer Aussparung des Zellhalters eingeklemmt, wobei der Zellhalter im Bereich der Mantelfläche der Energiespeicherelemente angreift;
e. Die Stirnseiten der einzelnen Energiespeicherelemente liegen außerhalb des Zellhalters.

Bei dem Zellhalter, der auch als Haltematrix bezeichnet werden kann, handelt es sich insbesondere um ein Spritzgussteil aus Kunststoff. Ein besonderer Vorteil von Kunststoff als Material für den Zellhalter liegt in dessen verhältnismäßig leichtem Gewicht und dessen elektrisch isolierenden Eigenschaften.

Der Zellhalter ist so ausgebildet, dass er mehrere Aussparungen aufweist. Diese Aussparungen können auch als Aufnahmen bezeichnet werden, in die die einzelnen Energiespeicherelemente des Klemmverbunds eingesetzt werden. Weitere Elemente zur Positionierung und Fixierung der Energiespeicherzellen sind nicht erforderlich. Insbesondere müssen keinen zusätzlichen Rahmen oder ähnliches verwendet werden.

Ein wichtiges Merkmal des erfindungsgemäßen Klemmverbunds ist, dass der Zellhalter im Bereich der Mantelfläche und insbesondere in einem mittleren Bereich der Energiespeicherelemente angreift. Dies hat den besonderen Vorteil, dass die Enden der Energiespeicherelemente, also insbesondere die Bereiche mit den Stirnseiten der zylindrischen Rundzellen (Polseiten), freiliegen und nicht von dem Zellhalter bedeckt sind. Dadurch wird ein freier Zugang zu den Zellenden ermöglicht, der für die elektrische Kontaktierung der Energiespeicherelemente genutzt werden kann, beispielsweise zum Verschweißen mit Zellverbindern oder anderen Ableitern.

Ein weiterer besonderer Vorteil liegt darin, dass durch die freiliegenden Zellenden der Energiespeicherelemente eine direkte Wärmeübertragung beispielsweise an ein Batteriegehäuse möglich ist. Die beim Entladen oder Laden der Energiespeicherelemente entstehende Wärme kann also direkt über eine flächige Wärmeabführung abgeleitet werden, so dass das Temperaturmanagement einer mit einem solchen Klemmverbund ausgestatteten Batterie im Vergleich mit herkömmlichen Batterien in besonders vorteilhafter Weise realisiert werden kann. Insbesondere wird eine Überhitzung der Batterie durch die gute Wärmeableitung vermieden.

Ein weiterer besonderer Vorteil des erfindungsgemäßen Klemmverbunds liegt darin, dass die Energiespeicherelemente in dem Zellhalter eingeklemmt sind und dadurch bei der Assemblierung kein zusätzlicher Montageschritt für eine Fixierung der Energiespeicherelemente in dem Zellhalter erforderlich ist. Die Zusammenstellung der Energiespeicherelemente in Form eines Klemmverbunds mit dem Zellhalter erleichtert zudem die Montage, da die Energiespeicherelemente beispielsweise beim Einsetzen in ein Gehäuse bereits im Verbund fixiert sind. Durch die Klemmung wird weiterhin vermieden, dass die Energiespeicherelemente während des Betriebs der Batterie ein radiales Spiel in Relation zu der Halterung aufweisen und sich bewegen könnten. Durch die Klemmung werden daher unerwünschte Scherkräfte insbesondere im Hinblick auf die Schweißverbindungen zwischen den Energiespeicherelementen und ihren jeweiligen elektrischen Ableiterelementen vermieden, die beispielsweise infolge von Vibrationen oder anderen Erschütterungen, denen die Batterie im Betrieb ausgesetzt ist, auftreten könnten.

Die Einteiligkeit des Zellhalters erleichtert die Montage einer Batterie mit einem solchen Klemmverbund, da beispielsweise Verschraubungen oder andere Verbindungen von mehreren Teilen eines Zellhalters, wie es herkömmlicherweise erforderlich ist, bei dem erfindungsgemäßen Klemmverbund nicht notwendig sind. Auch die Anzahl der Bauteile wird durch die Einteiligkeit des Zellhalters verringert, was auch aus Kostengründen vorteilhaft ist und zudem die Assemblierung vereinfacht.

In bevorzugter Weise umgreift der Zellhalter die Mantelfläche der einzelnen Energiespeicherelemente nicht vollflächig, sondern nur anteilig. Dies hat besondere Vorteile im Hinblick auf eine mögliche Wärmeentwicklung innerhalb einer mit solchen Klemmverbünden ausgestatteten Batterie, da die entstehende Wärme besonders gut aus den Energiespeicherelementen abgeleitet werden kann.

Die Anordnung der zylindrischen Rundzellen innerhalb des Zellhalters kann beispielsweise so ausgebildet sein, dass der Zellhalter in dem mittleren Drittel der zylindrischen Rundzellen, bezogen auf die Längserstreckung der Mantelfläche, angreift. Die jeweils außenliegenden Drittel und damit die Stirnseiten liegen außerhalb des Zellhalters. Es kann auch vorgesehen sein, dass der Zellhalter mehr als das mittlere Drittel der Mantelfläche umgreift. Vorteilhafterweise liegt mindestens ein Zehntel, bezogen auf die Längserstreckung der Mantelfläche, außerhalb des Zellhalters und steht damit für eine Wärmeabführung zur Verfügung.

Der erfindungsgemäße Klemmverbund kann auch als Batteriepack oder Batterieblock bezeichnet werden.

In einer besonders bevorzugten Ausgestaltung des erfindungsgemäßen Klemmverbunds ist das folgende zusätzliche Merkmal vorgesehen:
a. Die Aussparungen des Zellhalters weisen eine hexagonale Form auf.

Die hexagonale, also sechseckige Form der Aussparungen des Zellhalters bzw. der Aufnahmen für die einzelnen Energiespeicherelemente ist in besonderer Weise geeignet, da hierdurch in einfacher Weise eine radial spielfreie Aufnahme der zylindrischen Rundzellen möglich ist, wobei die Rundzellen fest in ihrer Position gehalten werden. Durch die hexagonale Form der Aufnahmen wird insbesondere eine wabenartige Struktur gebildet, wobei die einzelnen Aussparungen jeweils eine Wabenzelle bilden.

Die Wabenstruktur hat den weiteren Vorteil, dass damit eine im Wesentlichen konstante Wandstärke über den gesamten Zellhalter realisiert werden kann, was insbesondere für die Formstabilität des Spritzgussteils von besonderem Vorteil ist. Die Wabenstruktur erlaubt darüber hinaus in vorteilhafter Weise eine Material- und Gewichtsreduzierung gegenüber herkömmlichen Zellhaltern mit anderer Struktur. Auch für die Fertigung als Spritzgussteil eignet sich die Wabenstruktur in besonderer Weise, da die Wabenstruktur ein zuverlässiges und gleichmäßiges Füllverhalten beim Spritzgießen erleichtert.

In besonders bevorzugten Ausführungsformen zeichnet sich der Klemmverbund durch das folgende zusätzliche Merkmal aus:
a. Die einzelnen Aussparungen sind jeweils mit mindestens einer in das Innere der Aussparung weisenden Klemmrippe versehen.

Durch eine und bevorzugt mehrere Klemmrippen, die in das Innere der einzelnen Aussparungen, also in das Innere der einzelnen Aufnahmeräume des Zellhalters ragen, können die einzelnen Rundzellen besonders zuverlässig und spielfrei in dem Klemmverbund gehalten werden.

In weiteren, ganz besonders bevorzugten Ausgestaltungen des erfindungsgemäßen Klemmverbunds im Hinblick auf die Klemmrippen ist mindestens eines der folgenden zusätzlichen Merkmale vorgesehen:
a. Die einzelnen Aussparungen sind mit jeweils zwei oder mehr in das Innere der Aussparung weisenden Klemmrippen versehen;
b. Die Aussparungen des Zellhalters weisen eine hexagonale Form auf und die einzelnen Aussparungen des Zellhalters sind mit drei in das Innere der Aussparung weisenden Klemmrippen versehen;
c. Die Klemmrippen der einzelnen Aussparungen des Zellhalters liegen auf nicht benachbarten Innenseiten der einzelnen Aussparungen.

Vorzugsweise sind die vorgenannten Merkmale a. und b., und besonders bevorzugt, die vorgenannten Merkmale a., b. und c. in Kombination miteinander realisiert.

Durch diese bevorzugten Ausbildungen des Zellhalters können die zylindrischen Rundzellen auch bei auftretenden Fertigungstoleranzen besonders zuverlässig und spielfrei in dem Zellhalter gehalten werden. Es werden dabei zusätzliche dynamische Belastungen im Betrieb einer Batterie, die sich negativ auf die Schweißverbindungen zwischen den einzelnen Rundzellen und ihren jeweiligen elektrischen Ableitern auswirken können, vermieden.

Vorzugsweise sind die Klemmrippen auf den Innenseiten der Aussparungen so angeordnet, dass sich die Klemmrippen nur auf jeder zweiten Innenseite befinden. Bei einer hexagonalen Form der Aussparungen befindet sich also auf der Innenseite, die einer Klemmrippe gegenüberliegend, keine Klemmrippe.

Insbesondere durch die Anordnung der Klemmrippen auf nicht benachbarten Innenseiten der einzelnen Aussparungen bzw. Aufnahmen für die einzelnen Zellen wird eine Elastizität erreicht, die es erlaubt, auch bei leicht unterschiedlichen Durchmessern der Rundzellen in Folge von Produktionstoleranzen die Zellen sicher festzuhalten.

Weiterhin zeichnet sich der erfindungsgemäße Klemmverbund vorzugsweise durch das folgende zusätzliche Merkmal aus:
a. Der Zellhalter weist eine Struktur auf, bei der die einzelnen Aussparungen von gemeinsamen Seitenwänden begrenzt werden.

Die gemeinsamen Seitenwände bilden dabei also Zwischenwände zwischen den einzelnen Aussparungen bzw. Aufnahmen des Zellhalters.

In besonders bevorzugter Weise ist bezüglich dieses Aspekts der Erfindung das folgende zusätzliche Merkmal vorgesehen:
a. Die gemeinsamen Seitenwände weisen jeweils ausschließlich eine Klemmrippe auf.

Durch dieses Merkmal wird erreicht, dass sich die gemeinsame Seitenwand, die auf einer Seite mit einer Klemmrippe versehen ist, beim Einsetzen der Rundzellen in Richtung der nächsten Aussparung bewegen kann, sodass Toleranzunterschiede beim Durchmesser der Rundzellen kompensiert werden können.

In einer besonders bevorzugten Ausführungsform weist der Zellhalter demgemäß eine Wabenstruktur auf, bei der die einzelnen Aussparungen (Zellnester) jeweils sechs Innenwände aufweisen. Auf diesen sechs Innenwänden sind drei Klemmrippen gleichmäßig in einem 120° Winkel verteilt. Die Innenwände benachbarter Aussparungen (Zellnester) werden von gemeinsamen Seitenwänden (Zwischenwänden) gebildet, wobei sich an einer gemeinsamen Seitenwand immer nur eine Klemmrippe befindet. Das heißt, dass sich in keinem Fall zwei gegenüberliegende Klemmrippen auf derselben Seitenwand befinden. Infolge der Elastizität der dünnwandigen Kunststoffwände des Zellhalters ergibt sich hieraus eine Federeffekt der Seitenwand in das benachbarte Zellnest hinein. Somit kann jedes Energiespeicherelement in einer Art "Übermaß-Passung" geklemmt und gehalten werden, sodass ein spielfreies Klemmen der Energiespeicherelemente in allen Zellnestern des Zellhalters, beispielsweise in 154 Zellnestern, gewährleistet wird.

Durch diese Maßnahmen können auftretende Toleranzen (Fertigungstoleranzen) in Bezug auf den Zellendurchmesser allgemein und in Bezug auf den tangential an den drei Klemmrippen anliegenden Durchmesser der Zellen im Zellhalter ausgeglichen werden. Darüber hinaus können auch gegebenenfalls auftretende unterschiedliche Zellendurchmesser auf der Pluspolseite und der Minuspolseite der Zellen ausgeglichen werden. Solche Unterschiede zwischen den beiden Polseiten einer Zelle können beispielsweise in einem Bereich von nominal 0,1 - 0,2 mm liegen.

Allgemein sind Toleranzen auch bei der Herstellung von Kunststoffspritzgussteilen nicht zu vermeiden. Diese Toleranzen basieren vor allem auf einem Verzug durch unterschiedliches Abkühlen der Strukturen an verschiedenen Stellen des Spritzgussteils. Weiterhin spielen Werkzeugtoleranzen, Werkzeugtrennungen etc. eine Rolle. Daher kann bei herkömmlichen Zellhaltern eine Wiederholbarkeit der Maßhaltigkeit insbesondere bei einem Zellhalter mit mehreren Zellnestern und entsprechender Teilgröße nicht sicher gewährleistet werden. Die Erfindung löst dieses Problem vor allem durch die flexiblen Zwischenwände und die Klemmrippen in den einzelnen Zellnestern des Zellhalters.

Für eine gute Klemmwirkung ist es besonders vorteilhaft, wenn die Toleranzen der Zellen und auch des Zellhalters, insbesondere im Hinblick auf die einzelnen Zellnester mit den Klemmrippen, nur klein sind. Bevorzugt beträgt die gemeinsame Toleranz ±0,5, weiter bevorzugt ±0,2, besonders bevorzugt ±0,1.

Für die "Übermaß-Passung" ist es weiterhin zweckdienlich, wenn die Oberfläche und die Entformungsschräge der Klemmrippen bei einer Fertigung des Zellhalters als Spritzgussteil an diese Funktion angepasst sind. Insbesondere ist es zweckmäßig, wenn die Entformungsschräge bei der Fertigung 0° beträgt.

Insgesamt können mit den erfindungsgemäßen Maßnahmen und insbesondere mit den flexiblen Zwischenwänden in dem Zellhalter die Toleranzen der Zellen und der Zellnester kompensiert werden.

Herkömmliche, starre Zellhalter, die z. B. runde Zellnester oder Waben als Zellnester aufweisen und bei denen an allen Wänden der Zellnester geklemmt wird, ohne dass die Wände ausweichen können, haben den Nachteil, dass die Zellnester nicht mit Übermaß ausgeführt werden können. Ein Übermaß würde dazu führen, dass die Zellen teilweise nicht in den Zellhalter fügbar sind oder lose sitzen. In der Regel ist es bei solchen herkömmlichen Zellhaltern daher erforderlich, einen zweiteiligen Zellhalter zu verwenden und/oder die Zellen in dem Zellhalter zu verkleben.

Der Zellhalter gemäß der Erfindung gewährleistet trotz seine Einteiligkeit ein sicheres Klemmen der Zellen durch den Federeffekt der flexiblen Zwischenwände, sodass ein Toleranzausgleich für die fertigungsbedingten Toleranzen bei den Zellen und dem Zellhalter erreicht wird.

In besonders bevorzugten Ausführungsformen des erfindungsgemäßen Klemmverbunds ist das folgende zusätzliche Merkmal vorgesehen:
a. Die Energiespeicherelemente sind Lithium-Ionen-Zellen oder Natrium-Ionen-Zellen.

Lithium-Ionen-Zellen sind für vielfältige Anwendungen von Batterien weit verbreitet, da Lithium-lonen-Zellen sich vor allem durch eine besonders große Energiedichte bei vergleichsweise niedrigem Gewicht auszeichnen. Allerdings werden auch Natrium-lonen-Zellen immer interessanter. Diese besitzen zwar meist eine vergleichsweise geringe Energiedichte. Die Verfügbarkeit von Natrium übersteigt aber die von Lithium um ein Vielfaches.

Allgemein basieren Lithium-Ionen-Zellen auf dem Einsatz von Lithium, welches in Form von Ionen zwischen den Elektroden des Energiespeicherelements hin und her wandern kann.

Natrium-Ionen- basieren auf dem Einsatz von Natrium, welches in Form von Ionen zwischen den Elektroden des Energiespeicherelements hin und her wandern kann.

Die negative Elektrode und die positive Elektrode von Natrium- und Lithium-Ionen-Energiespeicherelementen werden oft von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Energiespeicherelemente kommen prinzipiell sämtliche Materialien in Frage, die Lithium-Ionen aufnehmen und wieder abgeben können. Für die negative Elektrode werden beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Die Aktivmaterialien sind in der Regel als Schicht auf einem bandförmige Stromkollektor aufgebracht. Der Stromkollektor stellt dabei eine elektrochemisch inaktive Komponente des Energiespeicherelements dar. Als Stromkollektoren sind insbesondere metallische Folien geeignet, die als Träger für das jeweilige Aktivmaterial dienen. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und sorgt häufig auch für die Haftung des Aktivmaterials auf den Stromkollektoren.

Als Elektrolyten für Lithium-Ionen-Energiespeicherelemente eignen sich vor allem Lösungen von Lithiumsalzen wie Lithiumhexafluorophosphat (LiPF₆) in organischen Lösungsmitteln (z. B. Ether und Ester der Kohlensäure).

In zylindrischen Rundzellen sind die Elektroden der Zelle in bevorzugter Weise in Form eines Wickels angeordnet, wobei zwischen den bandförmigen Elektroden mindestens ein bandförmiger Separator angeordnet ist. In anderen Ausführungsformen können die Elektroden auch in gestapelter Form vorliegen.

Die Erfindung umfasst weiterhin eine Batterie mit einer Mehrzahl von Energiespeicherelementen. Diese Batterie zeichnet sich durch die folgenden Merkmale aus:
a. Die Batterie umfasst ein Gehäuse;
b. In dem Gehäuse ist mindestens ein Klemmverbund gemäß der obigen Beschreibung angeordnet;
c. Die Energiespeicherelemente des Klemmverbunds sind über ihre außerhalb des Zellhalters liegenden Stirnseiten mit Strukturelementen des Gehäuses und/oder der Batterie verklebt und/oder elektrisch kontaktiert.

Der Ausdruck Batterie umfasst auch ein Batteriemodul, wobei mehrere Batteriemodule zu einem größeren Batteriesystem zusammengesetzt sein können. Je nach Auslegung der Batterie oder des Batteriemoduls können in dem Gehäuse ein oder mehrere Klemmverbünde mit der für die jeweilige Anwendung geeigneten Anzahl von Energiespeicherelementen vorgesehen sein.

Bei dem Gehäuse der Batterie kann es sich um ein metallisches Gehäuse handeln. Es sind jedoch auch andere Ausbildungen des Gehäuses möglich, beispielsweise ein Gehäuse aus Kunststoff und/oder Kohlenstofffasern.

Aus praktischen Gründen sind kubische Gehäuseformen besonders geeignet, da sie beispielsweise gut stapelbar sind. Das Gehäuse kann weiterhin so ausgebildet sein, dass es in platzsparender Weise verbaut werden kann, beispielsweise im Hinblick auf Anwendungen im Automobilbereich oder für Verwendungen als Fahrradakkumulator oder Ähnliches.

Bei dem Strukturelement des Gehäuses und/oder der Batterie, mit dem die Stirnseiten der Energiespeicherelemente beispielsweise verklebt sind, kann es sich beispielsweise um die Innenseite des Gehäuses oder um eine andere Trägerstruktur innerhalb des Gehäuses handeln.

Bei dem Strukturelement des Gehäuses und/oder der Batterie, mit dem die Stirnseiten der Energiespeicherelemente elektrisch kontaktiert sind, kann es sich beispielsweise um eine an sich bekannte Platine handeln. Diese Platine kann weiterhin der Träger für eine Batteriemanagement-Elektronik sein, über die die einzelnen Energiespeicherelemente des Klemmverbunds miteinander elektrisch verbunden sind.

In besonders bevorzugten Ausgestaltungen ist jeweils eine Stirnseite der Energiespeicherelemente mit einem Strukturelement des Gehäuses verklebt. Die elektrische Kontaktierung der Energiespeicherelemente erfolgt bevorzugt über die jeweils andere Stirnseite der Energiespeicherelemente. Hierfür können geeignete Leiterelemente, Zellverbinder oder Ähnliches vorgesehen sein, die in dem jeweiligen stirnseitigen Bereich der Energiespeicherelemente angeschweißt werden.

Im Hinblick auf die Verklebung der Energiespeicherelemente mit einem Strukturelement des Gehäuses und/oder der Batterie ist in besonders bevorzugten Ausführungsformen der Batterie mindestens eines der folgenden zusätzlichen Merkmale vorgesehen:
a. Die Verklebung ist mit einer wärmeleitfähigen Vergussmasse, insbesondere einem wärmeleitfähigen Vergussharz, ausgeführt;
b. Die Verklebung bewirkt eine Wärmeabführung aus den Energiespeicherelementen;
c. Die Verklebung bewirkt eine elektrische Isolierung der Energiespeicherelemente gegenüber dem Gehäuse.

Vorzugsweise sind die vorgenannten Merkmale a. und b., oder a. und c., oder in besonders bevorzugter Weise die vorgenannten Merkmale a., b. und c., in Kombination miteinander verwirklicht.

Als Vergussmasse können beispielsweise Epoxid-, Polyurethan-, Silikon-basierte und, besonders bevorzugt, Polybutadien-basierte Vergussmassen zum Einsatz kommen. Diese Materialien haben den Vorteil, dass hiermit zum einen eine Fixierung der einzelnen Energiespeicherelemente des Klemmverbunds und damit insgesamt des Klemmverbunds in dem Gehäuse erreicht wird. Zum anderen wird hiermit eine elektrische Isolierung der Energiespeicherelemente gegenüber dem Gehäuse erreicht, insbesondere wenn es sich hierbei um ein metallisches Gehäuse handelt. Darüber hinaus erlauben diese Materialien eine Wärmeabführung aus den Energiespeicherelementen, so dass während des Betriebs der Batterie und insbesondere während der Entlade- oder Ladeprozesse entstehende Wärme gut abgeleitet werden kann und es nicht zu einer Überhitzung der Batterie kommt.

Darüber hinaus kann die Batterie mit aktiven Temperierungsmitteln ausgestattet werden, beispielsweise mit einer Kühlplatte oder anderen Kühleinrichtungen. Mittels einer wärmeleitfähigen Vergussmasse, insbesondere eines wärmeleitfähigen Vergussharzes, können die Energiespeicherelemente an entsprechende Temperierungseinrichtungen angebunden werden, beispielsweise durch eine entsprechende Verklebung mit einer Kühlplatte oder einem anderen Kühlelement. In diesem Fall dient ein solches Kühlelement als Strukturelement, mit dem die Energiespeicherelemente des Klemmverbunds verklebt werden.

Die Verklebung mit der Vergussmasse kann insbesondere so ausgeführt werden, dass die Vergussmasse die freien Enden der Energiespeicherelemente in Höhe von beispielsweise einigen Millimetern umschließt. Auf diese Weise werden die Energiespeicherelemente an dem jeweiligen Strukturelement fixiert und gesichert. Weiterhin werden die Energiespeicherelemente dadurch gegenüber dem Batteriegehäuse vorteilhafterweise elektrisch isoliert, wobei gleichzeitig eine direkte Wärmeübertragung und flächige Wärmeabführung an das Batteriegehäuse ermöglicht wird.

Als Material für die Vergussmasse eignen sich vor allem Materialien, die eine geringe Viskosität aufweisen und/oder die selbstnivellierend sind. Weiterhin ist eine gute Anhaftung an Kunststoffen und Metallen sowie eine ausreichende Wärmeleitfähigkeit zweckmäßig. Weiterhin ist es besonders vorteilhaft, wenn das Material für die Vergussmasse im Hinblick auf einen Brandfall selbstlöschende Eigenschaften aufweist.

Vorteilhafterweise zeichnen sich die verwendeten Materialien für die Vergussmasse durch einen breiten Temperatureinsatzbereich von beispielsweise -60 °C - +150 °C sowie eine gute Balance zwischen hoher Wärmeleitfähigkeit und Viskosität sowie durch gute Haftungswerte auf Kunststoff und Metallen aus.

Die Viskosität von bevorzugten Materialien für die Vergussmasse kann beispielsweise in einem Bereich von 4.000 - 5.500 mPa*s (Viskosität Brookfield bei 25°C, Prüfnorm ISO 2555), insbesondere in einem Bereich von 4.500 - 5.000 mPa*s (Viskosität Brookfield bei 25°C), liegen, und vorzugsweise 4.700 mPa*s (Viskosität Brookfield bei 25°C) betragen.

Die Wärmeleitfähigkeit von bevorzugten Materialien für die Vergussmasse kann beispielsweise in einem Bereich von 0,80 - 1,10 W/m*K (Prüfnorm ASTM D 7984), insbesondere in einem Bereich von 0,90 - 1,00 W/m*K, liegen und vorzugsweise 0,95 W/m*K betragen.

Vorzugsweise können Polybutadien-Vergussharze, insbesondere zweikomponentige Polybutadien-Vergussharze, eingesetzt werden.

Die Erfindung umfasst weiterhin einen Zellhalter für zylindrische Rundzellen. Der erfindungsgemäße Zellhalter ist einteilig und ist aus Kunststoff gebildet. Er umfasst eine Mehrzahl von Aussparungen bzw. Aufnahmen in drei- oder mehreckiger Form mit einer entsprechenden Anzahl von Innenseiten. Der Zellhalter ist zum Einklemmen von einer Mehrzahl von zylindrischen Rundzellen vorgesehen. Die einzelnen Rundzellen sind jeweils in eine Aussparung des Zellhalters einzuklemmen, wobei der Zellhalter im Bereich der Mantelfläche der Rundzellen angreift, so dass die Stirnseiten der einzelnen Rundzellen außerhalb des Zellhalters liegen.

Der Zellhalter bildet vorzugsweise eine wabenartige Struktur, indem die einzelnen Aussparungen des Zellhalters eine hexagonale Form aufweisen.

Weiterhin sind die einzelnen Aussparungen vorzugsweise mit mindestens einer in das Innere der Aussparung weisenden Klemmrippe versehen. Insbesondere im Fall einer hexagonalen Form der Aussparungen sind vorzugsweise drei Klemmrippen pro Aussparung vorgesehen. Die Klemmrippen sind in Bezug zur benachbarten Aussparung vorzugsweise versetzt angeordnet, sodass bei einer gemeinsamen Zwischenwand von zwei benachbarten Aussparungen diese Zwischenwand nur auf einer Seite mit einer Klemmrippe versehen ist.

Bezüglich weiterer Merkmale des erfindungsgemäßen Zellhalters wird auch auf die obige Beschreibung verwiesen.

Weitere Merkmale und Vorteile der Erfindung ergeben sich aus der nachfolgenden Beschreibung von bevorzugten Ausführungsbeispielen in Verbindung mit den Zeichnungen. Hierbei können die einzelnen Merkmale jeweils für sich oder in Kombination miteinander realisiert sein.

### KURZE BESCHREIBUNG DER ZEICHNUNGEN

In den Figuren zeigen:
- Fig. 1: Aufsicht auf einen Zellhalter gemäß der Erfindung;
- Fig. 2: Detailansicht des Zellhalters aus Fig. 1;
- Fig. 3: Aufsicht auf einen Ausschnitt eines erfindungsgemäßen Klemmverbunds mit dem Zellhalter aus Fig. 1 und eingesetzten zylindrischen Rundzellen;
- Fig. 4: Schrägansicht auf die Oberseite eines erfindungsgemäßen Klemmverbunds; und
- Fig. 5: Schrägansicht auf die Unterseite eines erfindungsgemäßen Klemmverbunds.

### BESCHREIBUNG BEVORZUGTER AUSFÜHRUNGSBEISPIELE

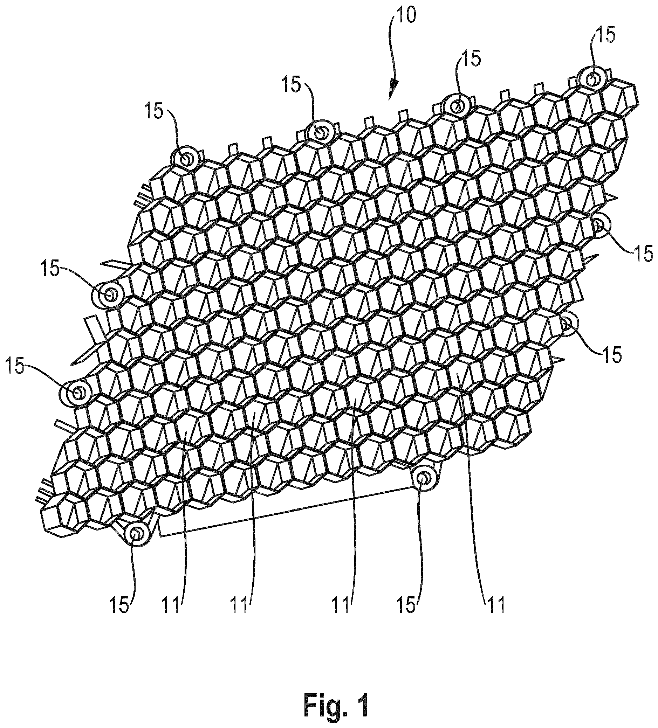

**Fig. 1** zeigt eine beispielhafte Ausführung eines Zellhalters 10 gemäß der Erfindung. In dieser bevorzugten Ausführungsform bildet der Zellhalter 10 eine wabenartige Struktur mit einerjeweils hexagonalen Form der einzelnen Aussparungen 11. Die Aussparungen 11 sind zur Aufnahme von einzelnen zylindrischen Rundzellen vorgesehen, die in die Aussparungen 11 eingeklemmt werden. Dabei ist es vorgesehen, dass der Zellhalter im Bereich der Mantelfläche der einzelnen Rundzellen angreift, sodass die Stirnseiten der Rundzellen außerhalb des Zellhalters 10 liegen.

Die Aussparungen 11 des Zellhalters 10 sind in einem regelmäßigen Muster angeordnet, wobei insgesamt vierzehn Reihen mit jeweils elf Aussparungen in diesem Ausführungsbeispiel vorgesehen sind. In diesen Zellhalter können also 154 zylindrische Rundzellen eingesetzt werden.

Im Bereich der Ränder des Zellhalters 10 sind kreisförmige Durchbrüche 15 vorgesehen, die zur Befestigung des Zellhalters 10 in einer zu montierenden Batterie dienen. Die Durchbrüche 15 sind insbesondere als angeformte Hülsen für die Durchführung von Befestigungsschrauben ausgebildet, sodass bei der Montage einer Batterie der Zellhalter 10 mit den eingesetzten Rundzellen in einem Batteriegehäuse befestigt werden kann.

Der Zellhalter 10 ist einteilig ausgebildet. Bei der Montage einer Batterie, die mit einem solchen Zellhalter ausgestattet wird, ist also kein weiteres Zellhalterelement erforderlich. Selbstverständlich können mehrere der hier gezeigten Zellhalter in einer Batterie oder beispielsweise einem Batteriemodul verbaut werden. Jeder dieser Zellhalter würde dann gemäß diesem Ausführungsbeispiel mit 154 zylindrischen Rundzellen ausgestattet werden. Gegebenenfalls kann es auch vorgesehen sein, dass der Zellhalter nicht vollständig mit zylindrischen Rundzellen bestückt wird, so dass weniger zylindrische Rundzellen pro Zellhalter vorgesehen wären.

In besonders bevorzugten Ausführungsformen sind die einzelnen Aussparungen 11 des Zellhalters 10 mit Klemmrippen ausgestatten, die in Fig. 1 der Übersichtlichkeit halber nicht dargestellt sind.

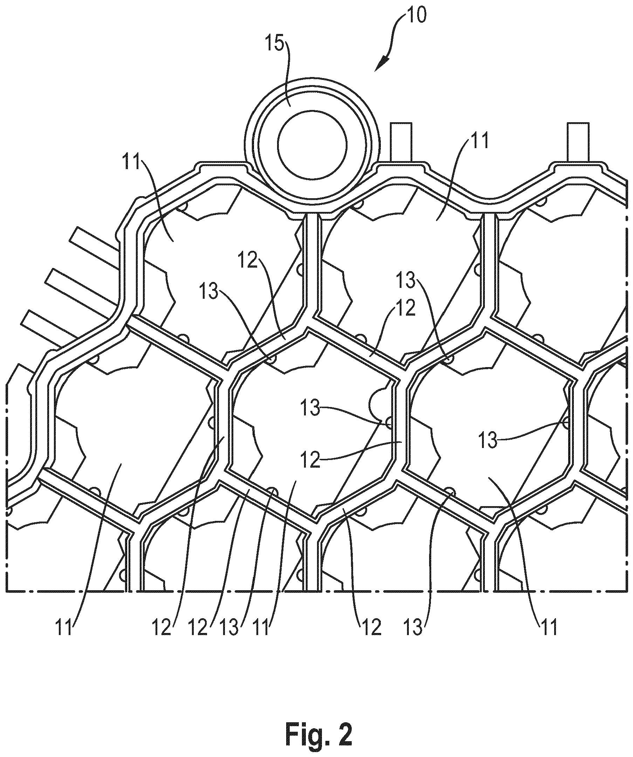

**Fig.** 2 zeigt eine Detailansicht des Zellhalters 10 aus Fig. 1. Zu erkennen sind die einzelnen Aussparungen 11 bzw. Aufnahmen für die einzusetzenden zylindrischen Rundzellen. Die einzelnen Aussparungen 11 werden jeweils von sechs Innenseiten begrenzt. Die jeweiligen Innenseiten werden von gemeinsamen Seitenwänden 12 gebildet.

Bei der hier gezeigten bevorzugten Ausführungsform des Zellhalters 10 sind auf drei der insgesamt sechs Innenseiten der Aussparungen 11 Klemmrippen 13 vorgesehen. Die Klemmrippen 13 sind so ausgebildet, dass sie einen stabilen Klemmverschluss mit den einzusetzenden zylindrischen Rundzellen bilden.

Die Klemmrippen 13 liegen auf jeweils nicht benachbarten Innenseiten der Aussparungen 11. Das heißt, die Klemmrippen befinden sich auf jeder zweiten Innenseite, wobei die Klemmrippen in einem Winkel von 120° angeordnet sind. In den benachbarten Aussparungen 11 sind die Klemmrippen 13 jeweils versetzt angeordnet. Das heißt, pro gemeinsamer Seitenwand 12 ist jeweils nur eine Klemmrippe 13 vorhanden.

Diese Anordnung der Klemmrippen 13 bewirkt eine besondere Flexibilität des Zellhalters. Die jeweilige Seitenwand kann gegebenenfalls etwas ausweichen, wenn eine zylindrische Rundzelle, die sich im Bereich der oberen Toleranzgrenze im Hinblick auf ihren Durchmesser bewegt, eingesetzt wird. Diese Ausbildung des Zellhalters 10 erlaubt also eine besonders vorteilhafte Kompensation von Toleranzunterschieden bei den Größen der zylindrischen Rundzellen.

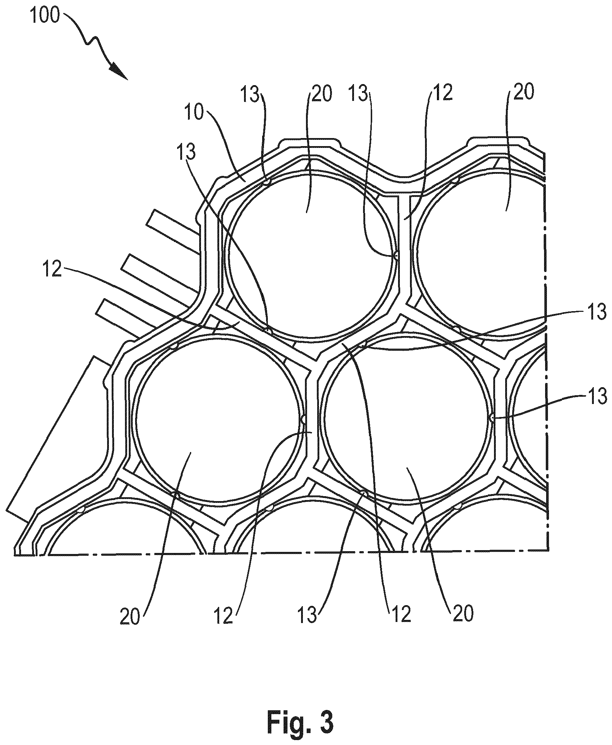

**Fig. 3** zeigt in einer Aufsicht einen Ausschnitt des Zellhalters 10 mit eingesetzten Energiespeicherelementen (zylindrische Rundzellen) 20. Jede zweite Innenseite einer Aussparung des Zellhalters 10, ist mit einer Klemmrippe 13 ausgestattet. Die eingeschobenen Rundzellen 20 werden an den drei Klemmrippen 13 gehalten. Durch die Elastizität der Wabenstruktur des Zellhalters 10 können die Zwischenwände gegebenenfalls in Richtung der benachbarten Aussparung ausweichen, sofern die eingeschobene Rundzelle 20 einen Durchmesser aufweist, der sich im oberen Bereich der Toleranz bewegt.

In dem erfindungsgemäßen einteiligen Zellhalter 10 werden die Energiespeicherelemente 20 radial spielfrei fest in der vorgesehenen Position gehalten. Durch das Design der Klemmrippen 13 in der Wabenstruktur und dessen Elastizität ist es möglich, die einzelnen Energiespeicherelemente trotz ihrer Produktionstoleranzen und daher leicht variierendem Durchmesser sicher festzuhalten.

Die Einteiligkeit des Zellhalters 10 bietet eine Kostenersparnis im Hinblick auf das Material und auch im Hinblick auf die Assemblierung, da weniger Assemblierungsschritte bei der Montage erforderlich sind. Weiterhin sind keine Schraubverbindungen zur Fixierung von mehreren Zellhalterteilen, wie es bei herkömmlichen Zellhaltern in der Regel erforderlich ist, notwendig. Ein Vorteil des Verzichts auf solche Schraubverbindungen ist darüber hinaus, dass solche Schraubverbindungen gegen ein Lösen in einem weiteren Arbeitsschritt gesichert werden müssen. Dies ist bei dem erfindungsgemäßen Zellhalter nicht erforderlich.

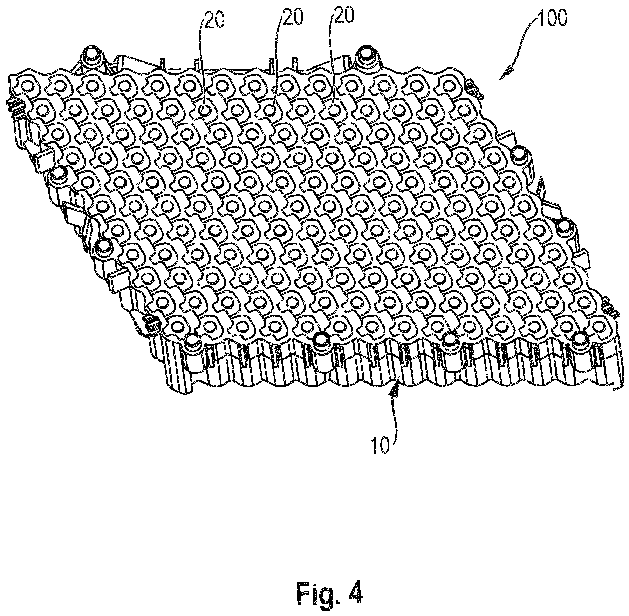

**Fig. 4** zeigt eine Aufsicht auf die Oberseite eines Klemmverbunds 100, der von einem mit zylindrischen Rundzellen 20 komplett bestückten Zellhalter 10 gebildet wird. Die auf dieser Seite freiliegenden Stirnseiten der Rundzellen 20 liegen für eine elektrische Kontaktierung der Energiespeicherelemente frei. Auf dieser Seite können beispielsweise übliche Zellverbinder aufgeschweißt werden, um die Energiespeicherelemente elektrisch zu kontaktieren.

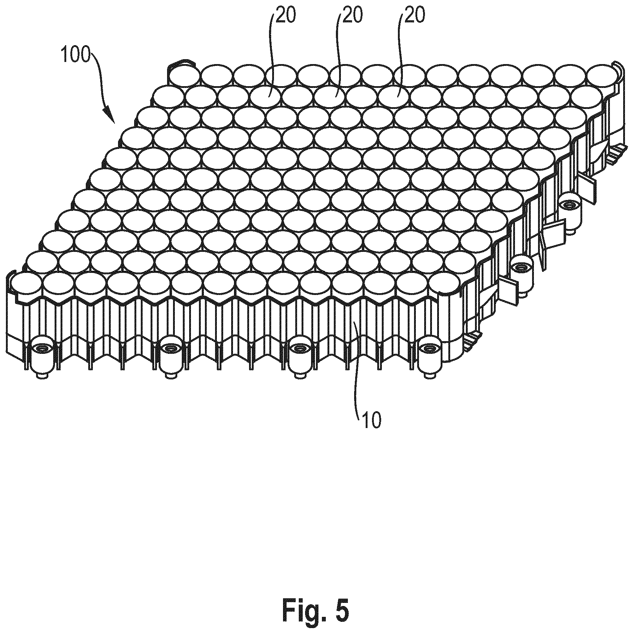

**Fig. 5** zeigt eine Aufsicht auf die Unterseite des Klemmverbunds 100. Zu erkennen ist, dass die aus dem Zellhalter 10 herausragenden Enden der jeweiligen Rundzellen 20 freiliegen, da der Zellhalter 10 im Bereich der Mantelflächen der Rundzellen 20 angreift. Die nach oben ragenden freien Enden der Energiespeicherelemente 20 können beispielsweise mittels eines wärmeleitfähigen Vergussharzes an einem Strukturelement eines Batteriegehäuses fixiert werden. Neben einer Fixierung kann dabei das Vergussharz für eine elektrische Isolierung der Energiespeicherelemente gegenüber dem Gehäuse sorgen. Zugleich kann durch diese Verklebung eine optimale Wärmeabführung aus den Energiespeicherelementen erreicht werden, indem die Wärme auf das Gehäuse übertragen und auf diese Weise abgeleitet werden kann.

## Patentansprüche

1. Klemmverbund (100) mit einem Zellhalter (10) und einer Mehrzahl von elektrischen Energiespeicherelementen (20) in Form von zylindrischen Rundzellen mit jeweils einer Mantelfläche und zwei Stirnseiten mit den folgenden Merkmalen:
a. Der Zellhalter (10) ist einteilig;
b. Der Zellhalter (10) ist aus Kunststoff gebildet;
c. Der Zellhalter (10) weist eine Mehrzahl von Aussparungen (11) in drei- oder mehreckiger Form mit einer entsprechenden Anzahl von Innenseiten auf;
d. Die einzelnen Energiespeicherelemente (20) sind jeweils in einer Aussparung (11) des Zellhalters (10) eingeklemmt, wobei der Zellhalter (10) im Bereich der Mantelfläche der Energiespeicherelemente (20) angreift;
e. Die Stirnseiten der einzelnen Energiespeicherelemente (20) liegen außerhalb des Zellhalters (10).

2. Klemmverbund nach Anspruch 1 mit dem folgenden zusätzlichen Merkmal:
a. Die Aussparungen (11) des Zellhalters (10) weisen eine hexagonale Form auf.

3. Klemmverbund nach Anspruch 1 oder Anspruch 2 mit dem folgenden zusätzlichen Merkmal:
a. Die einzelnen Aussparungen (11) sind jeweils mit mindestens einer in das Innere der Aussparung weisenden Klemmrippe (13) versehen.

4. Klemmverbund nach Anspruch 3 mit mindestens einem der folgenden zusätzlichen Merkmale:
a. Die einzelnen Aussparungen (11) sind mit jeweils zwei oder mehr in das Innere der Aussparung weisenden Klemmrippen (13) versehen;
b. Die Aussparungen (11) des Zellhalters weisen eine hexagonale Form auf und die einzelnen Aussparungen (11) des Zellhalters sind mit drei in das Innere der Aussparung weisenden Klemmrippen (13) versehen;
c. Die Klemmrippen (13) der einzelnen Aussparungen des Zellhalters liegen auf nicht benachbarten Innenseiten der einzelnen Aussparungen (11).

5. Klemmverbund nach einem der vorhergehenden Ansprüche mit dem folgenden zusätzlichen Merkmal:
a. Der Zellhalter (10) weist eine Struktur auf, bei der die einzelnen Aussparungen (11) von gemeinsamen Seitenwänden (12) begrenzt werden.

6. Klemmverbund nach Anspruch 5 mit dem folgenden zusätzlichen Merkmal:
a. Die gemeinsamen Seitenwände (12) weisen jeweils ausschließlich eine Klemmrippe (13) auf.

7. Klemmverbund nach einem der vorhergehenden Ansprüche mit dem folgenden zusätzlichen Merkmal:
a. Die Energiespeicherelemente (20) sind Lithium-Ionen-Zellen oder Natrium-Ionen-Zellen.

8. Batterie mit einer Mehrzahl von Energiespeicherelementen (20) mit den folgenden Merkmalen:
a. Die Batterie umfasst ein Gehäuse;
b. In dem Gehäuse ist mindestens ein Klemmverbund (100) gemäß einem der Ansprüche 1 bis 7 angeordnet;
c. Die Energiespeicherelemente (20) des Klemmverbunds sind über ihre außerhalb des Zellhalters liegenden Stirnseiten mit Strukturelementen des Gehäuses und/oder der Batterie verklebt und/oder elektrisch kontaktiert.

9. Batterie nach Anspruch 8 mit mindestens einem der folgenden zusätzlichen Merkmale:
a. Die Verklebung ist mit einer wärmeleitfähigen Vergussmasse, insbesondere einem wärmeleitfähigen Vergussharz, ausgeführt;
b. Die Verklebung bewirkt eine Wärmeabführung aus den Energiespeicherelementen (20);
c. Die Verklebung bewirkt eine elektrische Isolierung der Energiespeicherelemente (20) gegenüber dem Gehäuse.
